# EUROPÄISCHE PATENTANMELDUNG

(11) **EP 1 639 923 A1**
(43) Veröffentlichungstag der Anmeldung: **29.03.2006**
(21) Anmeldenummer: 04022870.2
(22) Anmeldetag: 24.09.2004
(51) Int. Cl.: A47J 31/40

(54) **Vorrichtung zum Zubereiten von Getränken aus Pulver oder Granulat**

(71) Anmelder: Rieder, Bruno, 3904 Naters (CH); Bucher, Dominique, 3942 Raron (CH)
(72) Erfinder: Bucher, Dominique, 3942 Raron (CH)
(74) Vertreter: Secklehner, Günter

(57) **Zusammenfassung**

Die Erfindung beschreibt eine Vorrichtung (1) zur Zubereitung von Getränken (12) aus Pulver oder Granulat und einer Flüssigkeit (3) und weist eine Steuervorrichtung, Mittel (2) zum Zuführen einer Flüssigkeit eine Heizvorrichtung (4) und einer Kühlvorrichtung (8) für die Flüssigkeit (3), Mittel (10) zum Dosieren der Flüssigkeit sowie einen Mischbehälter (11) auf. Der Mischbehälter (11) ist zwecks Reinigung aus der Vorrichtung (1) herausnehmbar.

## Beschreibung

Die Erfindung betrifft eine Vorrichtung zur Zubereitung von Getränken aus Pulver oder Granulat und einer Flüssigkeit, mit einer Steuervorrichtung, mit Mitteln zum Zuführen einer Flüssigkeit, mit einer Heizvorrichtung und einer Kühlvorrichtung für die Flüssigkeit, mit Mitteln zum Dosieren der Flüssigkeit und mit einem Mischbehälter.

Aus dem Stand der Technik, beispielsweise den Dokumenten DE 29611088 U1, WO 96/03067, US 6173117, GB 2240465 und DE 3511159 A1, sind derartige Vorrichtungen bekannt. Das Dokument DE 29611088 U1 beschreibt eine Vorrichtung zur automatischen Herstellung eines trinkbaren Nahrungs- oder Genussmittels mit einem Flüssigkeitsbehälter und einem Behälter für eine lösliche Substanz, wobei beide Behälter mit steuerbaren Auslässen mit einer Mischkammer verbunden sind. Letztere hat einen Auslass, der es erlaubt, das fertige Getränk beispielsweise in eine Trinkflasche abzulassen. In der Mischkammer ist ein herausnehmbarer Mixer angeordnet. Nach der Beschreibung wird das Gerät gereinigt, indem Wasser aus dem Flüssigkeitsbehälter in die Mischkammer gelassen, diese durch betätigen des Mixers gespült und dann das Wasser in einen Auffangbehälter abgelassen wird.

Gerade im Bereich der flüssigen Nahrung für Säuglinge und Kleinkinder, für welche die Erfindung insbesondere vorgesehen ist, werden Eiweissverbindung enthaltende Pulver und Granulate verwendet. Die daraus hergestellten Getränke haben die Tendenz, stark an Oberflächen anzuhaften, sodass es in den meisten Fällen nicht genügt, diese Oberflächen mit Wasser abzuspülen.

Ausgehend von diesem Stand der Technik liegt der vorliegenden Erfindung die Aufgabe zu Grunde, eine Vorrichtung der eingangs genannten Art vorzuschlagen, bei der sich insbesondere die mit dem Getränk in Kontakt kommenden Komponenten in einfacher Weise gründlich reinigen lassen.

Diese Aufgabe wird gemäss der Erfindung dadurch gelöst, dass der Mischbehälter zwecks Reinigung aus der Vorrichtung herausnehmbar ist.

Diese Lösung hat insbesondere den Vorteil, dass der herausnehmbare Mischbehälter ausserhalb der Vorrichtung einfach und gründlich gereinigt werden kann.

Nach einer Ausführungsart der Erfindung umfassen die Mittel zum Zuführen einer Flüssigkeit einen Flüssigkeitsbehälter. Dadurch kann die Vorrichtung ähnlich wie eine Kaffeemaschine verwendet und an einer nahezu beliebigen Stelle aufgestellt und betrieben werden.

Nach einer anderen Ausführungsart der Erfindung ist die Heizvorrichtung für die Flüssigkeit ein Durchlauferhitzer, insbesondere ein Steigrohr-Durchlauferhitzer. Dies erlaubt eine kostengünstige Produktion der Vorrichtung, denn derartige Durchlauferhitzer werden bei bekannten Kaffeemaschinen eingesetzt und daher in großen Stückzahlen produziert.

Nach einer weiteren Ausführungsart der Erfindung ist die Kühlvorrichtung in Fliessrichtung der Flüssigkeit nach der Heizvorrichtung angeordnet und mit einem Zwischenspeicher für die Flüssigkeit verbunden. Ein Zwischenspeicher erlaubt eine exakte Steuerung der Flüssigkeitstemperatur, was bei gewissen, mit der Vorrichtung zu verarbeitenden Pulvern und Granulaten von erheblicher Bedeutung ist.

Nach einer Ausführungsart der Erfindung kann die Kühlvorrichtung mindestens ein Peltier-Element enthalten. Mit solchen Elementen lässt sich eine Kühlwirkung durch Anlegen einer Spannung erzielen. Wird die Kühlvorrichtung ausschliesslich mit solchen Elementen realisiert, kann auf ein zirkulierendes flüssiges oder gasförmiges Kühlmedium verzichtet werden.

Wenn nach einer anderen Ausführungsart der Erfindung am Ausgang des Zwischenspeichers ein Dosierventil angeordnet ist, kann die Vorrichtung mit einer entsprechend programmierbaren Steuervorrichtung eine Vielzahl verschiedener Zubereitungsarten durchführen. Beispielsweise kann Pulver oder Granulat mit einer bestimmten Flüssigkeitsmenge vorgemischt und danach auf die Endmenge verdünnt werden.

Nach noch einer Ausführungsart der Erfindung ist der Mischbehälter mit Kühlmitteln ausgestattet. Dadurch wird dem Umstand Rechnung getragen, dass bei vielen Pulvern oder Granulaten eine Mischtemperatur erforderlich ist, die höher ist als die Trinktemperatur. Diese Kühlmittel können als Kreislauf mit einem Kühlmittel, einer Flüssigkeit oder einem Gas, ausgebildet sein, und/oder sie können mindestens ein Peltier-Element enthalten. Werden die Kühlmittel ausschliesslich mit solchen Elementen realisiert, kann auf ein zirkulierendes flüssiges oder gasförmiges Kühlmedium verzichtet werden.

Wenn nach einer weiteren Ausführungsart der Mischbehälter mit einer Mischvorrichtung ausgestattet ist, können mit der Vorrichtung auch schwer lösliche Pulver und Granulate verarbeitet werden. Vorzugsweise ist die Mischvorrichtung als Rührwerk ausgebildet, wobei ein entsprechender Antrieb in der Vorrichtung untergebracht sein kann.

Nach einer besonders bevorzugten Ausführungsart der Erfindung ist die Mischvorrichtung als Strahlmischer ausgebildet. Dadurch lässt sich der Mischbehälter ohne bewegliche Teile realisieren und dessen Reinigung wird noch einfacher.

Wenn nach einer Ausführungsart der Mischbehälter ein Ablassventil aufweist, braucht er zum Abfüllen eines in ihm zubereiteten Getränks nicht aus der Vorrichtung herausgenommen zu werden, sondern das Getränk kann beispielsweise in eine Trinkflasche für Säuglinge abgelassen werden.

Nach einer Ausführungsart ist das Ablassventil durch eine Bodenöffnung im Mischbehälter gebildet, die durch eine Schieberplatte verschliessbar ist. Eine solche Konstruktion begünstigt eine einfache und gründliche Reinigung aller Komponenten, die mit dem Getränk in Berührung kommen.

Wenn nach einer Ausführungsart der Mischbehälter mit einem Temperaturfühler ausgestattet ist, kann die Vorrichtung so gesteuert werden, dass das Getränk nur dann aus der Vorrichtung entnehmbar ist, wenn dessen Temperatur die gewünschte Trinktemperatur nicht übersteigt.

Nach einer bevorzugten Ausführungsart ist der Mischbehälter mit Kupplungsmitteln ausgestattet, mit denen die Kühlmittel und/oder der Temperaturfühler und/oder die Mischvorrichtung bzw. das Rührwerk und/oder ein Betätigungsorgan für das Ablassventil lösbar mit der Vorrichtung verbindbar sind. Diese Massnahme ermöglicht eine einfache Handhabung der Vorrichtung, insbesondere bei der Reinigung des Mischbehälters. Nach einer besonders bevorzugten Ausführungsart sind diese Kupplungsmittel derart angeordnet, dass sie alle in der gleichen Richtung beim Einsetzen des Mischbehälters in die Vorrichtung mit dieser verbindbar und in der entgegengesetzten Richtung von dieser trennbar sind. Dadurch wird die Handhabung weiter vereinfacht.

Nach einer Ausführungsart kann die Vorrichtung Mittel zum dosierten Zugeben eines Pulvers oder Granulats in den Mischbehälter aufweisen.

Besonders bevorzugt bestehen alle mit dem Mischbehälter verbundenen Bestandteile aus spülmaschinenfesten Werkstoffen, sodass der Mischbehälter zur Reinigung in eine Spülmaschine gegeben werden kann.

Ausführungsbeispiele der Erfindung werden nachfolgend unter Bezugnahme auf die beiliegenden Zeichnungen beschrieben.

Es zeigt:
- Fig. 1: eine schematische Darstellung der wichtigsten Komponenten einer Ausführungsart der Vorrichtung;
- Fig. 2: einen schematischen Längsschnitt durch eine Ausführungsart des Mischbehälters;
- Fig. 3: eine schematische Ansicht in Richtung des Pfeils III in Figur 2 auf den Boden des Mischbehälters;
- Fig. 4: einen schematischen Längsschnitt durch eine zweite Ausführungsart des Mischbehälters;
- Fig. 5: einen schematischen Längsschnitt durch eine dritte Ausführungsart des Mischbehälters.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäss auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäss auf die neue Lage zu übertragen. Weiter können auch Einzelmerkmale oder Merkmalskombinationen aus den gezeigten und beschriebenen unterschiedlichen Ausführungsbeispielen für sich eigenständige, erfinderische oder erfindungsgemässe Lösungen darstellen. Die Ausführungsbeispiele zeigen mögliche Ausführungsvarianten der Vorrichtung, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvarianten möglich sind, vom Schutzumfang mit umfasst. Der Ordnung halber sei abschliessend darauf hingewiesen, dass zum besseren Verständnis des Aufbaus der Vorrichtung diese bzw. deren Komponenten teilweise unmassstäblich und/oder vergrössert und/oder verkleinert dargestellt wurden.

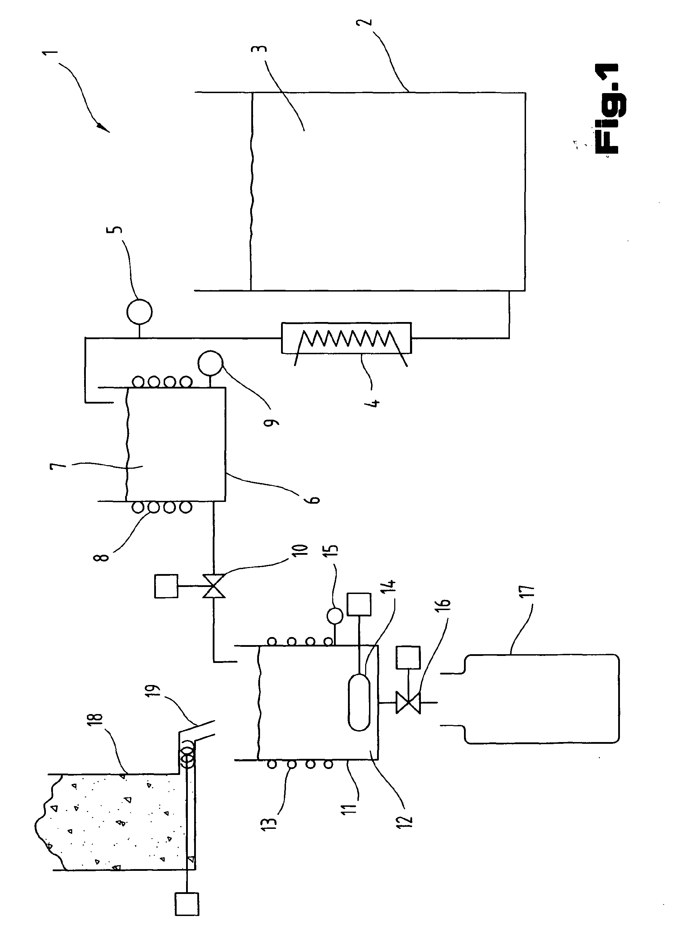

Figur 1 zeigt ein Funktionsschema einer Ausführungsart der erfindungsgemässen Vorrichtung, wobei insbesondere der Weg der Flüssigkeit und die für die Funktion wichtigsten Komponenten dargestellt sind. Die dargestellten funktionellen Komponenten der Vorrichtung werden durch eine nicht dargestellte Steuervorrichtung gesteuert. Die als Ganzes mit 1 bezeichnete Vorrichtung enthält einen Flüssigkeitsbehälter 2, der vorzugsweise aus der Vorrichtung heraus genommen werden kann, damit er sich leicht reinigen und mit Flüssigkeit füllen lässt. Die Flüssigkeit wird in den meisten Fällen frisches Leitungswasser sein, die Vorrichtung kann aber auch zur Zubereitung von Getränken mit anderen Flüssigkeiten, beispielsweise Milch verwendet werden. Der Einfachheit halber wird in der nachfolgenden Beschreibung davon ausgegangen, dass die Flüssigkeit Wasser 3 ist. Das Volumen des Flüssigkeitsbehälters 2 entspricht vorzugsweise mehreren Trinkrationen und beträgt beispielsweise einen Liter. Die Flüssigkeit 3 aus dem Flüssigkeitsbehälter 2 gelangt beispielsweise durch Schwerkraft in einen Erhitzer 4, der in nicht dargestellter Weise mit der Steuervorrichtung verbunden ist und als Steigrohr-Erhitzer ausgebildet sein kann, wie man ihn beispielsweise bei Filter-Kaffeemaschinen kennt. Die Flüssigkeit kann aber alternativ auch mit irgend einem Durchlauferhitzer oder einem Boiler erwärmt werden, etwa wie bei einer bekannten Espressomaschine. Gegebenenfalls kann zur Förderung der Flüssigkeit eine Pumpe vorgesehen sein.

Nachdem die Flüssigkeit im Erhitzer 4 auf beispielsweise etwa 90°C erhitzt wurde, gelangt sie in einen Zwischenspeicher 6, dessen Volumen vorzugsweise mindestens einer Trinkration entspricht, also beispielsweise etwa 200 Milliliter. Mittels eines mit der Steuervorrichtung verbundenen Temperaturfühlers 5 wird dabei sichergestellt, dass die Temperatur der Flüssigkeit in einem vorbestimmten Bereich liegt und insbesondere eine Temperatur nicht unterschreitet, bei der allenfalls in der Flüssigkeit vorhandene Keime zuverlässig vernichtet werden, was gerade bei der Verwendung von Leitungswasser für die Zubereitung von Babynahrung besonders wichtig ist. Die Verwendung eines Steigrohr-Erhitzers hat den Vorteil, dass zur Förderung von Wasser vom Flüssigkeitsbehälter 2 zum Zwischenspeicher 6, der in diesem Fall höher angeordnet ist, als der Flüssigkeitsbehälter 2, keine Pumpe benötigt wird. In bekannter Weise wird bei diesem Typ Erhitzer das Wasser im Steigrohr durch Dampfblasen nach oben gefördert. Das sich im Zwischenspeicher 6 befindende Warmwasser 7 wird sodann durch einen Kühler 8 auf die für das entsprechende Pulver geforderte Mischtemperatur, beispielsweise 60°C gekühlt. Die meisten Hersteller von Pulvern oder Granulaten zur Zubereitung von Getränken, insbesondere Getränken für Säuglinge und Kleinkinder, schreiben vor, bei welcher Temperatur das Getränk zu mischen ist. Eine zu hohe Mischtemperatur würde wertvolle Nahrungsbestandteile, beispielsweise Eiweissverbindungen schädigen oder zerstören, wogegen bei einer zu tiefen Mischtemperatur das Pulver oder Granulat nicht ausreichend aufgelöst würde.

Gegebenenfalls kann im Zwischenspeicher 6 ein Mischer (nicht dargestellt) vorgesehen sein, der eine gleichmässige Temperaturverteilung im Wasser sicherstellt. Sobald durch einen im Zwischenspeicher 6 angeordneten Temperaturfühler 9 festgestellt wir, dass die gewünschte Mischtemperatur erreicht ist, wird ein Dosierventil 10 geöffnet und das Warmwasser gelangt in einen Mischbehälter 11, der vorzugsweise tiefer als der Zwischenspeicher 6 angeordnet ist. Selbstverständlich kann aber auch eine Pumpe (nicht dargestellt) zur Förderung des Warmwassers vom Zwischenspeicher 6 in den Mischbehälter 11 vorgesehen sein, welche das Dosierventil ersetzen und dessen Funktion übernehmen könnte.

An Stelle des Zwischenspeichers 6 und des Kühlers 8 kann alternativ auch ein Durchlaufkühler (nicht dargestellt) vorgesehen sein, der das vom Erhitzer 4 kommende Wasser auf die geforderte Mischtemperatur abkühlt. In diesem Fall könnte das Dosierventil 10 entfallen und dessen Funktion vom genannten Steigrohr-Erhitzer oder der genannten Pumpe übernommen werden.

Im dargestellten Beispiel könnte auf den Temperaturfühler 5 verzichtet werden, weil der Temperaturfühler 9 nacheinander die Temperatur des aus dem Erhitzer in den Zwischenspeicher 6 fliessenden Wassers und des im Zwischenspeicher 6 abgekühlten Wassers messen könnte.

Vor oder nach dem Einlassen des Wassers in den Mischbehälter 11 wird eine gewünschte Menge eines Pulvers oder Granulats in den Mischbehälter gegeben. Die Menge des Pulvers oder Granulats kann in bekannter Weise mit einem Messlöffel dosiert werden oder sie kann in einer entsprechenden Verpackung, etwa einer Blisterverpackung oder einem Beutel vordosiert sein. Auch eine Portionierung des Pulvers oder Granulats als gepresste Tablette ist möglich. Da der Mischbehälter 11 aus der Vorrichtung herausnehmbar ist, wie dies weiter unten noch eingehend erläutert wird, kann Pulver oder Granulat bereits vor dem Einsetzen des Mischbehälters 11 in die Vorrichtung 1 in den Mischbehälter gegeben werden, oder es kann in der Vorrichtung eine Einfüllöffnung, etwa in der Form eines Trichters, vorgesehen sein. Alternativ oder zusätzlich zur genannten Einfüllöffnung für Pulver oder Granulat kann in der Vorrichtung 1 auch eine Pulver-Dosiervorrichtung 19 vorgesehen sein, welche Pulver oder Granulat aus einem Pulver-Vorratsbehälter 18 in den Mischbehälter fördert, vorzugsweise durch Schwerkraft. Die Pulver-Dosiervorrichtung 19 kann beispielsweise, wie in der Figur angedeutet, als Schneckendosierer ausgebildet sein. Selbstverständlich können auch mehrere Pulver-Dosiervorrichtungen vorgesehen sein, damit mit der Vorrichtung 1 wahlweise verschiedene Getränke oder Mischungen verschiedener Getränke zubereitet werden können.

Die Menge des durch das Dosierventil 10 in den Mischbehälter gefüllten Wassers wird durch die Steuereinrichtung entsprechend der gewünschten Menge des fertigen Getränks dosiert. Im erwähnten Fall von vorportioniertem Pulver oder Granulat ist es beispielsweise möglich, dass mittels einer Tastatur eingegeben wird, was für eine Portion von Pulver oder Granulat eingefüllt wurde oder werden soll und in der Steuervorrichtung ist gespeichert, welche Menge Wasser dieser Pulverportion entspricht. Eine andere Möglichkeit besteht darin, dass die betreffende Verpackung einen Informationsträger, beispielsweise einen abreissbaren Streifen mit einem aufgedruckten Barcode, enthält, der in eine Leseöffnung der Vorrichtung eingeführt wird, sodass diese die entsprechende Menge Wasser mit der für das Pulver vorgeschriebenen Mischtemperatur im Mischbehälter 11 bereitstellt. Bei einigen Getränkezubereitungen wird vom Hersteller empfohlen, zuerst die Pulvermenge in beispielsweise etwa zwei Dritteln der benötigter Wassermenge aufzulösen und dann diese Mischung bis zur gewünschten Trinkmenge zu verdünnen. Auch dies kann durch die Steuervorrichtung der erfindungsgemässen Vorrichtung berücksichtigt werden. Alternativ kann auch ein Pulvermengen-Detektor (nicht dargestellt) vorgesehen sein, der die im Mischbehälter 11 vorhandene Pulvermenge ermittelt, sodass die Steuervorrichtung entsprechend in ihr gespeicherter Informationen die korrekte Wassermenge bestimmt.

Im Mischbehälter 11 ist vorteilhaft eine Mischvorrichtung, vorzugsweise ein Rührwerk 14 vorhanden, welches die vollständige Auflösung des Pulvers gewährleistet. Es sind auch andere Mischvorrichtungen wie beispielsweise ein Vibrationsmischer, der den Mischbehälter in Schwingungen versetzt oder ein Strahlmischer, bei dem das Pulver oder Granulat durch einen Flüssigkeitsstrahl aufgelöst wird, denkbar. Das Getränk 12 muss nun auf die Trinktemperatur gekühlt werden, welche im Fall flüssiger oder breiartiger Babynahrung üblicherweise 37 Grad Celsius beträgt. Die einfachste Variante würde darin bestehen, das Getränk 12, so lange abkühlen zu lassen, bis die Trinktemperatur erreicht ist. Da es aber erwünscht ist, mit der Vorrichtung ein Getränk in möglichst kurzer Zeit zuzubereiten, ist der Mischbehälter 11 mit einer Kühlvorrichtung ausgestattet, welche im vorliegenden Beispiel als Kühlschlange 13 ausgebildet ist, durch welche ein Kühlmittel zirkuliert wird. Alternativ könnte die Kühlvorrichtung, wie übrigens auch der erwähnte Kühler 8, durch Peltier-Elemente oder belüftete Kühlrippen gebildet werden. Vorteilhaft wird das Rührwerk 14 während des Kühlens weiter betrieben. Die Steuervorrichtung ist so ausgebildet, dass ein Ablassventil 16, durch welches das Getränk 12 in eine Trinkflasche 17 abgelassen wird, sich erst öffnen kann, wenn ein im Mischbehälter 11 vorgesehener Temperaturfühler 15 festgestellt hat, dass die gewünschte Trinktemperatur erreicht ist. Zusätzlich können in der Vorrichtung Verriegelungsmittel vorgesehen sein, die das Herausnehmen des Mischbehälters aus der Vorrichtung verhindern, so lange dessen Inhalt eine Temperatur aufweist, die über der eingestellten Trinktemperatur liegt.

Für den Fall, dass das trinkfertige Getränk 12 nicht sofort konsumiert werden kann, ist es möglich, dieses im Mischbehälter 11 auf der Trinktemperatur zu halten und erst auf einen Steuerbefehl, beispielsweise durch einen Knopfdruck, in die Trinkflasche 17 abzulassen. Hierzu kann die Kühlschlange 13 natürlich auch zum Temperieren verwendet werden. Alternativ kann eine Heiz- und/oder Kühlvorrichtung (nicht dargestellt) vorgesehen sein, welche das Getränk in der Trinkflasche 17 auf einer gewünschten Temperatur hält.

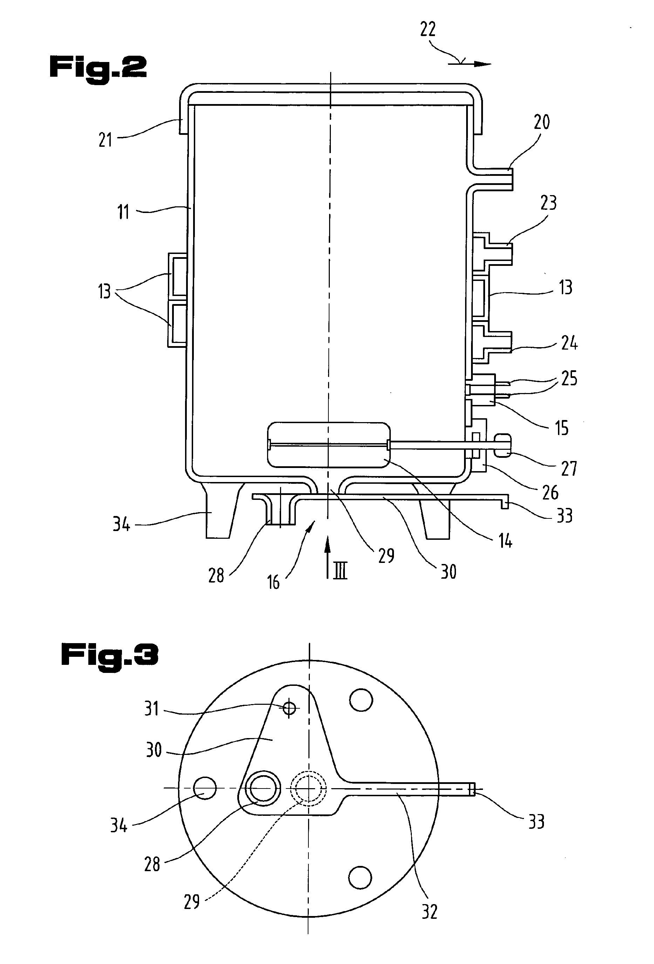

In Figur 2 ist ein Ausführungsbeispiel eines aus der Vorrichtung 1 herausnehmbaren Mischbehälters 11 dargestellt. In diesem Beispiel ist der Mischbehälter mit einem Deckel 21 ausgestattet, was aber nicht zwingend erforderlich ist. Ein Wassereinlauf 20 für das auf Mischtemperatur aufbereitete Wasser hat die Form eines kurzen Rohrstutzens, welcher einfach in ein in der Vorrichtung vorgesehenes Gegenstück eingesteckt werden kann. Die Kühlschlange 13 weist einen Einlauf 23 und einen Auslauf 24 für die Kühlflüssigkeit auf, die ebenfalls mit in der Vorrichtung 1 vorhandenen Kupplungsteilen durch einfaches Einstecken zu verbinden sind. Falls in einer anderen Ausführungsart die Kühlvorrichtung des Mischbehälters wie erwähnt durch Peltier-Elemente gebildet wird, können an Stelle des Einlaufs 23 und des Auslaufs 24 elektrische Steckkontakte vorgesehen sein. Der Temperaturfühler 15 kann wie dargestellt in der Behälterwand angeordnet und mit Steckkontakten 25 ausgestattet sein, die beim Einsetzen des Mischbehälters 11 in die Vorrichtung 1 automatisch mit der Steuereinrichtung verbunden werden. Eine Welle des Rührwerks 14 ist mittels einer Lager- und Dichtvorrichtung 26 durch die Behälterwand geführt und weist an ihrem freien Ende eine Kupplung 27 auf, mit welcher sie mit einem in der Vorrichtung vorhandenen Antrieb verbindbar ist. Schliesslich ist am Mischbehälter 11 wie erwähnt ein Ablassventil 16 vorhanden, mit dem das fertige Getränk 12 in eine Trinkflasche 17 abgelassen werden kann. Das Ablassventil 16 wird durch einen Betätigungshebel 32 geöffnet und geschlossen, wozu dieser an seinem Ende eine Kupplung 33 trägt, welche mit einem in der Vorrichtung 1 angeordneten Antrieb verbindbar ist.

Wie aus der Figur 2 ersichtlich, sind alle Elemente des Mischbehälters 11, die mit der Vorrichtung zu verbinden sind, namentlich der Wassereinlauf 20, der Einlauf 23 und der Auslauf 24 für die Kühlflüssigkeit, die Kontakte 25 des Temperaturfühlers 15, die Kupplung 27 für das Rührwerk 14 und die Kupplung 33 für das Ablassventil 16 an der selben Seite des Mischbehälters 11 angeordnet, sodass sie beim Einsetzen des Mischbehälters in Richtung des Pfeils 22 automatisch mit der Vorrichtung verbunden werden. Eine (nicht dargestellte) Rastvorrichtung kann, beispielsweise durch ein gut hörbares Klicken, dem Benutzer signalisieren, dass der Mischbehälter 11 korrekt in die Vorrichtung 1 eingesetzt wurde. Alternativ oder zusätzlich kann der korrekte Sitz des Mischbehälters 11 in der Vorrichtung auch durch ein optisches Signalmittel angezeigt werden.

Das Ablassventil 16 umfasst insbesondere eine Schieberplatte 30, die am Boden des Mischbehälters 11 um eine Schwenkachse 31 schwenkbar angeordnet ist. Die Schieberplatte 30 verschliesst eine im Behälterboden angeordnete Bodenöffnung 29 und weist ihrerseits einen Ablassstutzen 28 auf. Zum Öffnen des Ablassventils wird die Schieberplatte 30 mit Hilfe des Betätigungshebels 32 so verschwenkt, dass der Ablassstutzen 28 mit der Bodenöffnung 29 fluchtet. Ein derart aufgebautes Ablassventil 16 erlaubt es, sämtliche Oberflächen, die mit dem Getränk 12 in Berührung kommen, sehr einfach zu reinigen, beispielsweise durch Spülen in einer Geschirrspülmaschine.

Der Mischbehälter 11 ist mit drei Standfüssen 34 ausgestattet, damit er ausserhalb der Vorrichtung 1 aufgestellt werden kann.

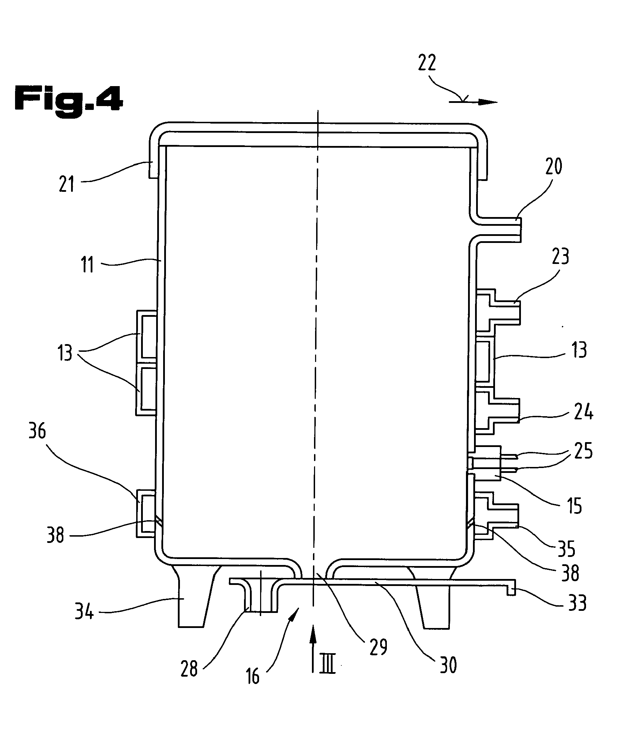

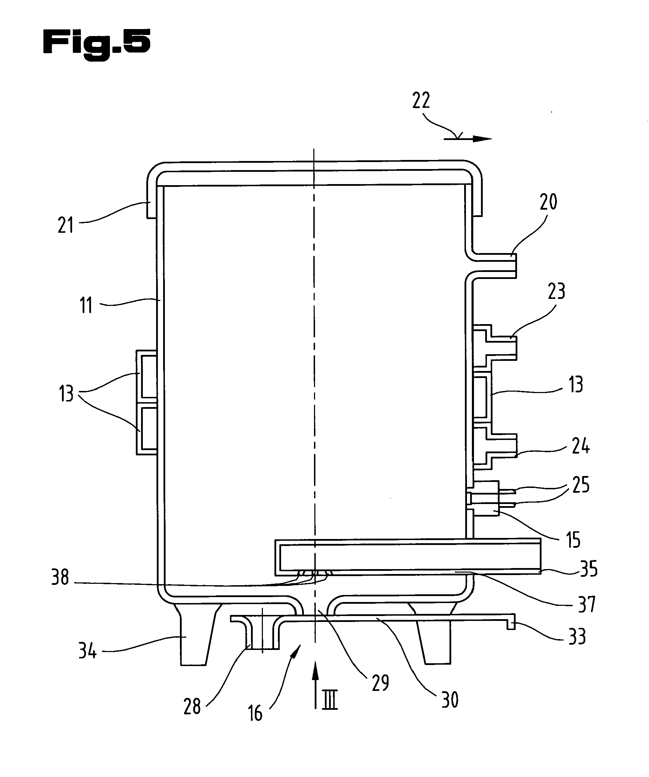

Die Figuren 4 und 5 zeigen zwei weitere Ausführungsbeispiele des Mischbehälters 11, die sich von der in Figur 2 dargestellten Ausführungsart dadurch unterscheiden dass an Stelle eines Rührwerks 14 ein Strahlmischer eingebaut ist, bei dem das Pulver durch feine Flüssigkeitsstrahlen aufgelöst wird, die unter Druck durch Düsen 38 in den Mischbehälter 11 strömen. Bei beiden Ausführungsformen sind dabei die Düsen 38 so angeordnet, dass sie zuerst das auf dem Behälterboden liegende Pulver treffen und später, bei steigendem Flüssigkeitsstand im Mischbehälter 11, in der Flüssigkeit eine starke Strömung und Durchmischung erzeugen. Weiter ist beiden Ausführungsarten gemeinsam, dass ein Anschluss 35 für die Flüssigkeit vorhanden ist, der wie die anderen der genannten Anschlüsse in Richtung des Pfeils 22 mit der Vorrichtung verbindbar ist. In Figur 4 ist eine besonders bevorzugte Ausführungsart des Strahlmischers dargestellt, bei welcher ein den Mischbehälter 11 umgebender Ringkanal 36 vorgesehen ist, von dem aus eine Mehrzahl von Düsen 38 gegen den Behälterboden gerichtet sind. Diese Ausführungsart ist deshalb besonders vorteilhaft, weil bei ihr das Innere des Mischbehälters 11 keine vorspringenden Teile enthält uns sich deshalb besonders einfach reinigen lässt. Bei der Ausführungsart nach Figur 5 sind die Düsen 38 an einem Strahlrohr 37 angeordnet und ebenfalls gegen den Behälterboden gerichtet. Um Verschmutzungen im Inneren des Anschlusses 35, des Ringkanals 36 und des Strahlrohrs 37 zu vermeiden, kann die Steuervorrichtung so ausgelegt sein, dass im Strahlmischer zu jeder Zeit, in der sich ein Getränk im Mischbehälter 11 befindet, ein höherer Druck herrscht als im Mischbehälter 11 im Bereich der Düsen 38.

Sämtliche für die Herstellung des Mischbehälters verwendeten Materialien sind vorzugsweise so gewählt, dass der Mischbehälter in einer Geschirrspülmaschine gereinigt werden kann. Damit stets ein sauberer Mischbehälter 11 zur Verfügung steht, kann die Vorrichtung 1 mit zwei Mischbehältern ausgeliefert werden und/oder der Mischbehälter 11 kann separat zum Kauf angeboten werden.

### Bezugszeichenaufstellung

- 1: Vorrichtung
- 2: Frischwasserbehälter
- 3: Frischwasser
- 4: Wassererhitzer
- 5: Temperaturfühler

- 6: Warmwasserbehälter
- 7: Warmwasser
- 8: Kühler
- 9: Temperaturfühler
- 10: Warmwasserventil

- 11: Mischbehälter
- 12: Getränk
- 13: Kühlschlange
- 14: Rührwerk
- 15: Temperaturfühler

- 16: Ablassventil
- 17: Trinkflasche
- 18: Pulver-Vorratsbehälter
- 19: Pulver-Dosiervorrichtung
- 20: Wassereinlauf

- 21: Deckel
- 22: Pfeil (Kupplungsrichtung)
- 23: Einlauf Kühlflüssigkeit
- 24: Auslauf Kühlflüssigkeit
- 25: Kontakte

- 26: Lager- und Dichtvorrichtung
- 27: Kupplung
- 28: Ablassstutzen
- 29: Bodenöffnung
- 30: Schieberplatte

- 31: Schwenkachse
- 32: Betätigungshebel
- 33: Kupplung
- 34: Standfuss
- 35: Anschluss Strahlmischer

- 36: Ringkanal
- 37: Strahlrohr
- 38: Düsen

## Patentansprüche

1. Vorrichtung (1) zur Zubereitung von Getränken (12) aus Pulver oder Granulat und einer Flüssigkeit (3), mit einer Steuervorrichtung, mit Mitteln (2) zum Zuführen einer Flüssigkeit, mit einer Heizvorrichtung (4) und einer Kühlvorrichtung (8) für die Flüssigkeit (3), mit Mitteln (10) zum Dosieren der Flüssigkeit und mit einem Mischbehälter (11), **dadurch gekennzeichnet, dass** der Mischbehälter (11) zwecks Reinigung aus der Vorrichtung (1) herausnehmbar ist.

2. Vorrichtung nach Anspruch 1, **dadurch gekennzeichnet, dass** die Mittel zum Zuführen einer Flüssigkeit (3) einen Flüssigkeitsbehälter (2) umfassen.

3. Vorrichtung nach einem der vorangehenden Ansprüche, **dadurch gekennzeichnet, dass** die Heizvorrichtung für die Flüssigkeit (3) ein Durchlauferhitzer (4), insbesondere ein Steigrohr-Durchlauferhitzer ist.

4. Vorrichtung nach einem der vorangehenden Ansprüche, **dadurch gekennzeichnet, dass** die Kühlvorrichtung (8) in Fliessrichtung der Flüssigkeit nach der Heizvorrichtung (4) angeordnet und mit einem Zwischenspeicher (6) für die Flüssigkeit verbunden ist.

5. Vorrichtung nach einem der vorangehenden Ansprüche, **dadurch gekennzeichnet, dass** die Kühlvorrichtung (8) mindestens ein Peltier-Element enthält.

6. Vorrichtung nach einem der vorangehenden Ansprüche, **dadurch gekennzeichnet, dass** am Ausgang des Zwischenspeichers (6) ein Dosierventil (10) angeordnet ist.

7. Vorrichtung nach einem der vorangehenden Ansprüche, **dadurch gekennzeichnet, dass** der Mischbehälter (11) mit Kühlmitteln (13) ausgestattet ist.

8. Vorrichtung nach Anspruch 7, **dadurch gekennzeichnet, dass** die Kühlmittel (13) mindestens ein Peltier-Element enthalten.

9. Vorrichtung nach einem der vorangehenden Ansprüche, **dadurch gekennzeichnet, dass** der Mischbehälter (11) mit einer Mischvorrichtung (13; 38) ausgestattet ist.

10. Vorrichtung nach Anspruch 9, **dadurch gekennzeichnet, dass** die Mischvorrichtung als Rührwerk (13) ausgebildet ist.

11. Vorrichtung nach Anspruch 9, **dadurch gekennzeichnet, dass** die Mischvorrichtung als Strahlmischer (38) ausgebildet ist.

12. Vorrichtung nach einem der vorangehenden Ansprüche, **dadurch gekennzeichnet, dass** der Mischbehälter (11) ein Ablassventil (16) aufweist.

13. Vorrichtung nach Anspruch 12, **dadurch gekennzeichnet, dass** das Ablassventil (16) durch eine Bodenöffnung (29) im Mischbehälter (11) gebildet ist, die durch eine Schieberplatte (30) verschliessbar ist.

14. Vorrichtung nach einem der vorangehenden Ansprüche, **dadurch gekennzeichnet, dass** der Mischbehälter (11) mit einem Temperaturfühler (15) ausgestattet ist.

15. Vorrichtung nach einem der Ansprüche 7 bis 14, **dadurch gekennzeichnet, dass** der Mischbehälter mit Kupplungsmitteln (23, 24, 25, 27, 33) ausgestattet ist, mit denen die Kühlmittel (13) und/oder der Temperaturfühler (15) und/oder die Mischvorrichtung bzw. das Rührwerk (13) und/oder ein Betätigungsorgan (30) für das Ablassventil (16) lösbar mit der Vorrichtung (1) verbindbar sind.

16. Vorrichtung nach Anspruch 15, **dadurch gekennzeichnet, dass** die Kupplungsmittel (23, 24, 25, 27, 33) derart angeordnet sind, dass sie alle in der gleichen Richtung (22) beim Einsetzen des Mischbehälters (11) in die Vorrichtung (1) mit dieser verbindbar und in der entgegengesetzten Richtung von dieser trennbar sind.

17. Vorrichtung nach einem der vorangehenden Ansprüche, **dadurch gekennzeichnet, dass** sie Mittel (19) zum dosierten Zugeben eines Pulvers oder Granulats in den Mischbehälter (11) aufweist.

18. Vorrichtung nach einem der vorangehenden Ansprüche, **dadurch gekennzeichnet, dass** alle mit dem Mischbehälter (11) verbundenen Bestandteile aus spülmaschinenfesten Werkstoffen bestehen.
